# EUROPEAN PATENT APPLICATION

(11) **EP 4 527 799 A1**
(43) Date of publication of application: **26.03.2025**
(21) Application number: 23820031.5
(22) Date of filing: 26.05.2023
(51) Int. Cl.: C01D 15/08, C22B 3/42, C22B 7/00

(54) **METHOD FOR MANUFACTURING HIGH-PURITY LITHIUM CARBONATE FROM WASTE SAGGER BY USING NEGATIVE ION EXCHANGE**

(30) Priority: 09.06.2022 KR 20220070192
(71) Applicant: Koreaseparation Co., Ltd., Donghae-si Gangwon-do 25799 (KR)
(72) Inventor: SONG, Won Hong, Seoul 04780 (KR)
(74) Representative: BCKIP Part mbB
(86) International application number: PCT/KR2023/007296
(87) International publication number: WO 2023/239095

(57) **Abstract**

The present invention provides an optimized method for recovering high-purity lithium carbonate from a lithium-containing composite oxide deposited on an eroded surface of a waste sagger discarded. Therefore, when the method for producing high-purity lithium carbonate from a waste sagger of the present invention is used, it is expected not only to be able to produce high-purity lithium carbonate that can be used for manufacturing lithium secondary batteries by recycling a discarded waste sagger, but also to be able to recycle a positive electrode active material, iron oxide, alumina, silicate, and calcium carbonate obtained as by-products during the production process of the lithium carbonate.

## Description

### TECHNICAL FIELD

The present invention relates to a method for producing high-purity lithium carbonate using anion exchange from a waste sagger. Specifically, the present invention relates to a method for producing high-purity lithium carbonate having purity of 99.9% or greater by crushing and dissolving a waste sagger, and then performing solid-liquid separation, wet magnetic separation, anion exchange, carbonation, pressurized carbonic acid dissolution, and heating fractional precipitation reactions.

### BACKGROUND ART

A positive electrode active material of a lithium secondary battery is prepared by being fired at a high temperature in a sagger made of ceramic oxide containing SiO₂, Al₂O₃, and MgO as main components. Since the sagger is used for repeated high-temperature firing of a lithium-containing composite oxide, which is a raw material of the positive electrode active material, the surface of the sagger is eroded over time, and lithium hydroxide, lithium carbonate, and the positive electrode active material are deposited on the eroded portion. Ultimately, the sagger with the surface eroded by the lithium hydroxide, the lithium carbonate, or the like is discarded due to the deterioration in thermal durability. The amount of waste saggers generated domestically is known to be about 9,000 tons per year, but as the demand for lithium secondary batteries rapidly increases due to the popularization of mobile devices and electric vehicles, the amount of waste saggers generated is also expected to increase rapidly.

As described above, a sagger is used in the preparation of a positive electrode active material and eroded by a lithium-containing composite oxide during a high-temperature firing process, and thus, loses its function. Therefore, if a lithium-containing composite oxide deposited in an eroded portion is recovered in the form of high-purity lithium sulfate, lithium carbonate, or lithium phosphate from a waste sagger discarded due to the deterioration in thermal durability caused by repeated high-temperature firing of the lithium-containing composite oxide, the recovered it is expected that it will be recycled lithium-containing composite oxide is expected to be recycled in the production of lithium-ion secondary batteries and reduce production costs. However, there is no known method for recovering a high-purity lithium compound from a waste sagger.

The patent literature and references cited herein are incorporated by reference herein to the same extent that each document is individually and clearly identified by reference.

### DISCLOSURE OF THE INVENTION

### TECHNICAL PROBLEM

An object of the present invention is to provide a method for recovering high-purity lithium carbonate having a purity of 99.9% or greater from a waste sagger discarded after being used for high-temperature firing when preparing a positive electrode active material for a lithium secondary battery.

Other objects and technical features of the present invention are presented in more detail by a detailed description of the invention, claims, and drawings below.

### TECHNICAL SOLUTION

The present invention provides a method for producing high-purity lithium carbonate from a waste sagger, wherein the method includes a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of allowing a filtrate obtained in a liquid phase through the primary solid-liquid separation to flow through an anion exchange resin to perform an anion exchange reaction, a fifth step of performing a carbonation reaction on a flow-through of the anion exchange reaction to prepare a carbonation reaction liquid, a sixth step of performing secondary solid-liquid separation on the carbonation reaction liquid, a seventh step of performing pressurized carbonic acid dissolution reaction on a solid phase obtained through the secondary solid-liquid separation, an eighth step of performing tertiary solid-liquid separation on a reaction liquid of the pressurized carbonic acid dissolution reaction, a ninth step of performing a heating fractional precipitation reaction on a filtrate obtained in a liquid phase through the tertiary solid-liquid separation, a tenth step of performing quaternary solid-liquid separation on a reaction liquid of the heating fractional precipitation reaction, and an eleventh step of drying a solid phase obtained through the quaternary solid-liquid separation to obtain high-purity lithium carbonate.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the anion exchange resin is an anion exchange resin prepared by allowing trimethyl ammonium or dimethyl ethanolamine to be adsorbed onto a styrene-based resin having a gel structure, wherein the anion exchange reaction is performed by allowing the filtrate obtained in a liquid phase through the primary solid-liquid separation to flow through an anion exchange tower filled with the anion exchange resin at a flow rate of 0.1 m/sec to 1 m/sec.

The carbonation reaction is performed by introducing the flow-through of the anion exchange reaction into a pressure reaction vessel (or a sealed container), injecting one selected from among carbon dioxide, carbonated water, and a lithium hydrogen carbonate aqueous solution to the flow-through to allow a reaction to occur therebetween until the pH reaches 7, and then letting the mixture to stay at a temperature of 80 °C to 100 °C for 20 minutes or more to complete the reaction, and the pressurized carbonic acid dissolution reaction is performed by mixing 100 parts by weight of water and 2 parts by weight to 12 parts by weight of lithium carbonate obtained in a solid phase through the secondary solid-liquid separation in a pressure reaction vessel (or a sealed container), and then blowing a carbon dioxide (CO₂) gas at 0 °C to 20 °C to maintain the carbon dioxide gas pressure in the reaction vessel at 1 bar to 25 bar, and stirring the mixture for 30 minutes to 120 minutes to dissolve the lithium carbonate.

The heating fractional precipitation reaction is performed by heating a concentration liquid obtained through reverse osmosis concentration to 80 °C to 100 °C for 20 minutes or more to precipitate lithium carbonate, and the lithium carbonate produced by the production method has a purity of 99.9% or greater.

The present invention provides a method for recovering high-purity lithium carbonate from a waste sagger, wherein the method includes a twelfth step of crushing a waste sagger to produce a waste sagger crushed material, a thirteenth step of adding an alkali leaching agent and water to the waste sagger crushed material and then allowing a reaction to occur therebetween to prepare a waste sagger crushed material dissolution reaction slurry, a fourteenth step of performing primary solid-liquid separation on the waste sagger crushed material dissolution reaction slurry, a fifteenth step of preparing a solid phase obtained through the primary solid-liquid separation as a suspension, and then performing primary wet magnetic separation to obtain a first magnetic complex and a first non-magnetic complex, a sixteenth step of preparing the first non-magnetic complex as a suspension, and then performing secondary wet magnetic separation to obtain a second magnetic complex and a second non-magnetic complex, a seventeenth step of introducing water and a leaching agent to the second non-magnetic complex, and then allowing a reaction to occur therebetween to prepare a lithium leaching reaction liquid, an eighteenth step of adjusting the pH of the lithium leaching reaction liquid to 6 to 8 to prepare a neutralization reaction liquid, a nineteenth step of performing quinary solid-liquid separation on the neutralization reaction liquid, a twentieth step of performing reverse osmosis concentration on a filtrate obtained in a liquid phase through the quinary solid-liquid separation, a twenty-first step of performing a carbonation reaction on a concentration liquid obtained through the reverse osmosis concentration process, a twenty-second step of performing senary solid-liquid separation on a reaction liquid of the carbonation reaction, a twenty-third step of performing a pressurized carbonic acid dissolution reaction on lithium carbonate obtained in a solid phase through the senary solid-liquid separation, a twenty-fourth step of performing tertiary solid-liquid separation on a reaction liquid of the pressurized carbonic acid dissolution reaction, a twenty-fifth step of performing a heating fractional precipitation reaction on a filtrate obtained in a liquid phase through the tertiary solid-liquid separation, a twenty-sixth step of performing quaternary solid-liquid separation on a reaction liquid of the heating fractional precipitation reaction, and a twenty-seventh step of drying a solid phase obtained through the quaternary solid-liquid separation to obtain high-purity lithium carbonate.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the leaching agent used for leaching the second non-magnetic complex is an acid leaching agent including one or two or more among sulfuric acid, nitric acid, and hydrochloric acid; or an alkali leaching agent including one or two or more among sodium hydroxide, potassium hydroxide, calcium hydroxide, calcium oxide, and magnesium hydroxide.

The reverse osmosis concentration uses a batch-type reverse osmosis facility, and the upper limit of the working pressure of a pump is set to 50 kg/cm², and the filtrate obtained in a liquid phase through the tertiary solid-liquid separation is concentrated until the concentration of lithium therein reaches 10,000 mg/ℓ to 70,000 mg/ℓ, and the pressurized carbonic acid dissolution reaction is performed by mixing 100 parts by weight of water and 2 parts by weight to 12 parts by weight of lithium carbonate obtained in a solid phase through the secondary solid-liquid separation in a pressure reaction vessel (or a sealed container), and then blowing a carbon dioxide (CO₂) gas at 0 °C to 20 °C to maintain the carbon dioxide gas pressure in the reaction vessel at 1 bar to 25 bar, and stirring the mixture for 30 minutes to 120 minutes to dissolve the lithium carbonate.

The heating fractional precipitation reaction is performed by heating the concentration liquid obtained through the reverse osmosis concentration to 80 °C to 100 °C for 20 minutes or more to precipitate lithium carbonate, and the lithium carbonate produced by the production method has a purity of 99.9% or greater.

### ADVANTAGEOUS EFFECTS

The present invention provides an optimized method for recovering high-purity lithium carbonate from a lithium-containing composite oxide deposited on an eroded surface of a waste sagger discarded. Therefore, when the method for producing high-purity lithium carbonate from a waste sagger of the present invention is used, it is expected not only to be able to produce high-purity lithium carbonate that can be used for manufacturing lithium secondary batteries by recycling a discarded waste sagger, but also to be able to recycle a positive electrode active material, iron oxide, alumina, silicate, and calcium carbonate obtained as by-products during the production process of the lithium carbonate.

### BRIEF DESCRIPTION OF THE DRAWINGS

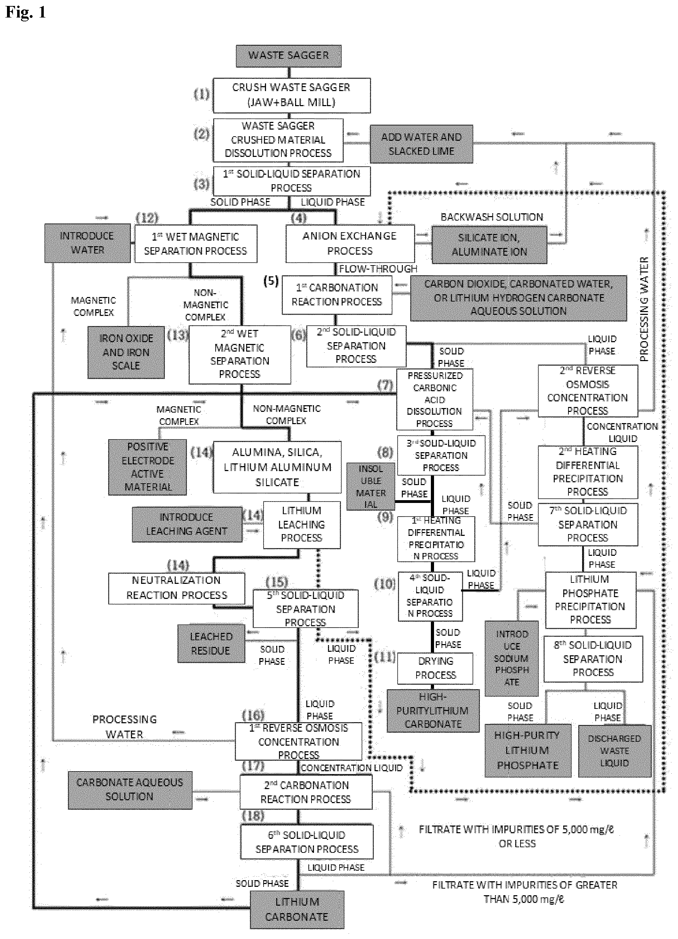

FIG. 1 schematically shows a method for producing high-purity lithium carbonate from a waste sagger of the present invention.

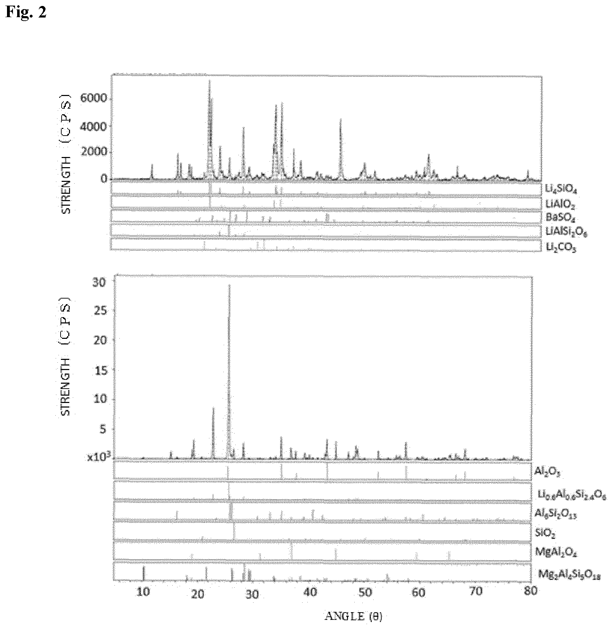

FIG. 2 shows results of XRD analysis of constituent minerals of a waste sagger of the present invention.

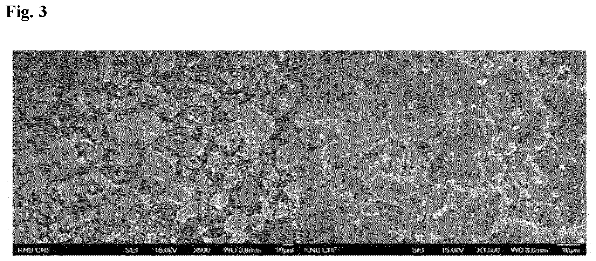

FIG. 3 is a photograph showing the overall particle size distribution and particle surface structure by using a scanning electron microscope (SEM) photograph of a waste sagger crushed material.

### BEST MODE FOR CARRYING OUT THE INVENTION

The present invention relates to a method for producing high-purity lithium carbonate using anion exchange from a waste sagger. Due to the repeated use of a sagger, the sagger is eroded by lithium hydroxide or lithium carbonate, and is destructed. An object of the present invention is to recover lithium carbonate, which is a high value-added lithium compound, with high purity from a waste sagger which is discarded without being recycled. The waste sagger is a ceramic container used in firing a positive electrode active material for a secondary battery, and contains SiO₂, Al₂O₃, and MgO as main components. Table 1 shows the composition of a waste sagger used in sintering NCA (sample name: SG1) and NCM (sample name: SG2), which are positive electrode materials.

**[Table 1]**

| Composition | SG1 (NCA) | SG2 (NCM) |
|---|---|---|
| Li₂O (as Li) | 4.52 (2.1)% | 1.89 (0.88)% |
| NiO | 0.13% | 0.16% |
| Co₃O₄ | 0.01% | 0.02% |
| SiO₂ | 49.38% | 30.73% |
| Al₂O₃ | 38.25% | 51.38% |
| CaO | 0.48% | 0.52% |
| MgO | 5.37% | 13.63% |
| Fe₂O₃ | 0.33% | 0.54% |
| Na₂O | 0.32% | 0.12% |
| K₂O | 0.30% | 0.19% |
| etc. | 0.91% | 0.82% |

As a result of the analysis, SG1 and SG2 are confirmed to have a high lithium (Li) content of 2.1% and 0.88%, respectively, and when the lithium content is converted into a lithium carbonate content, the lithium carbonate content corresponds to SG1 = 11.17% and SG2 = 4.68%. In addition, the contents of nickel and cobalt are confirmed to be 0.13% to 0.16% and 0.01% to 0.02%, respectively, which is confirmed to be sufficient for recovery.

The waste sagger is composed of mullite, cordierite, alumina, quartz, magnesium aluminate, lithium silicate, lithium aluminum oxide, lithium aluminum silicate, and the like. Among the constituent components of the waste sagger, materials that cause the destruction of the waster sagger are lithium silicate, lithium aluminum oxide, lithium aluminum silicate, and the like.

The present invention provides a method for producing high-purity lithium carbonate from a waste sagger, wherein the method includes a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of allowing a filtrate obtained in a liquid phase through the primary solid-liquid separation to flow through an anion exchange resin to perform an anion exchange reaction, a fifth step of performing a carbonation reaction on a flow-through of the anion exchange reaction to prepare a carbonation reaction liquid, a sixth step of performing secondary solid-liquid separation on the carbonation reaction liquid, a seventh step of performing pressurized carbonic acid dissolution reaction on a solid phase obtained through the secondary solid-liquid separation, an eighth step of performing tertiary solid-liquid separation on a reaction liquid of the pressurized carbonic acid dissolution reaction, a ninth step of performing a heating fractional precipitation reaction on a filtrate obtained in a liquid phase through the tertiary solid-liquid separation, a tenth step of performing quaternary solid-liquid separation on a reaction liquid of the heating fractional precipitation reaction, and an eleventh step of drying a solid phase obtained through the quaternary solid-liquid separation to obtain high-purity lithium carbonate.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the anion exchange resin is an anion exchange resin prepared by allowing trimethyl ammonium or dimethyl ethanolamine to be adsorbed onto a styrene-based resin having a gel structure, wherein the anion exchange reaction is performed by allowing the filtrate obtained in a liquid phase through the primary solid-liquid separation to flow through an anion exchange tower filled with the anion exchange resin at a flow rate of 0.1 m/sec to 1 m/sec.

The carbonation reaction is performed by introducing the flow-through of the anion exchange reaction into a pressure reaction vessel (or a sealed container), injecting one selected from among carbon dioxide, carbonated water, and a lithium hydrogen carbonate aqueous solution to the flow-through to allow a reaction to occur therebetween until the pH reaches 7, and then letting the mixture to stay at a temperature of 80 °C to 100 °C for 20 minutes or more to complete the reaction, and the pressurized carbonic acid dissolution reaction is performed by mixing 100 parts by weight of water and 2 parts by weight to 12 parts by weight of lithium carbonate obtained in a solid phase through the secondary solid-liquid separation in a pressure reaction vessel (or a sealed container), and then blowing a carbon dioxide (CO₂) gas at 0 °C to 20 °C to maintain the carbon dioxide gas pressure in the reaction vessel at 1 bar to 25 bar, and stirring the mixture for 30 minutes to 120 minutes to dissolve the lithium carbonate.

The heating fractional precipitation reaction is performed by heating a concentration liquid obtained through reverse osmosis concentration to 80 °C to 100 °C for 20 minutes or more to precipitate lithium carbonate, and the high-purity lithium carbonate has a purity of 99.9% or greater.

### MODE FOR CARRYING OUT THE INVENTION

Hereinafter, the method for producing high-purity lithium carbonate using anion exchange from a waste sagger of the present invention will be described in detail for each process.

### (1) First process: Waste sagger crushing process

A waste sagger is crushed into powder of 200# or less. There is a problem in that the crushing efficiency is too low to pulverize the waste sagger at once. Therefore, it is preferable that the waste sagger is coarsely crushed to 1 mm or less through primary crushing using a jaw crusher, and then crushed to 200# (mesh) or less through secondary crushing using a ball mill. The waste sagger has a high compressive strength and is vulnerable to impact. An impact-type crusher may be applied to the crushing of the waste sagger, but crushed particles having sharp surfaces with high hardness are generated, resulting in increasing the wear of parts of the crusher, thereby increasing the costs. Therefore, in the present invention, a jaw crusher with easy replacement of parts and low cost is used in the primary crushing process, and a ball mill is used in the secondary crushing process. Preferably, in order to improve the crushing efficiency, a medium crusher such as an impact crusher may be arranged before the secondary crushing process.

### (2) Second process: Waste sagger crushed material dissolution process

The waste sagger crushed material pulverized through the first process includes a lithium-containing material such as lithium hydroxide, lithium carbonate, lithium silicate, lithium aluminum oxide, or lithium aluminum silicate. Most of the lithium-containing materials are water-soluble, but some of the lithium-containing materials which contain lithium aluminum silicate have low solubility with respect to water, and thus, have a problem of being difficult to be dissolved only with water. In order to solve the above-described problem, in the present invention, a waste sagger crushed material dissolution process is applied in which the waste sagger crushed material is mixed with an alkali leaching agent including one or a mixture of two or more selected from the group consisting of a hydroxide of an alkali metal, a carbonate of an alkali metal, or a hydroxide of an alkali earth metal, and water, and then the mixture is heated. Since the alkali leaching agent is heated and dissolved together, lithium aluminum silicate or the like having low solubility with respect to water may also be decomposed and dissolved, so that the waste sagger crushed material dissolution process of the present invention has an advantage of increasing the recovery rate of lithium. Decomposition and dissolution reactions of the lithium-containing material having low solubility tend to increase in reactivity in proportion to the concentration of an alkali and the temperature. If an alkali leaching agent containing an alkali metal salt is used to this end, the concentration of silicon and aluminum increases, which requires a separate process to remove the same. In contrast, if a leaching agent made of an oxide or hydroxide of an alkali earth metal and water is used, soluble silicon or aluminum and a poorly soluble salt are formed, which promote the decomposition of lithium aluminum silicate and at the same time, help to maintain the concentration of the silicon and the aluminum in a solution low, and which react with lithium carbonate having relatively low solubility to produce lithium hydroxide with high solubility and poorly soluble carbonate, so that there is an advantage of improving the leaching rate of lithium. Therefore, in the waste sagger crushed material dissolution process of the present invention, calcium hydroxide, calcium oxide, or magnesium hydroxide is used as a leaching agent to promote the extraction of lithium, and the amount thereof added is suitably 5 parts by weight to 50 parts by weight based on 100 weight parts of the waste sagger. It has been confirmed that the waste sagger crushed material dissolution process requires 6 hours or more to complete the reaction at a temperature of 20 °C or lower, and the reaction is completed within 2 hours at 50 °C, and the reaction is completed within 30 minutes at 80 °C. In addition, the reaction is completed within 10 minutes around 100°C, but there is a problem in that the loss of energy due to the evaporation of water is significant. Therefore, the waste sagger crushed material dissolution process of the present invention is preferably performed for 30 minutes to 120 minutes at 50 °C to 80 °C.

In summary, the preferred waste sagger crushed material dissolution process of the present invention is to heat the waste sagger crushed material slurry containing calcium hydroxide, calcium oxide, or magnesium hydroxide, which is a leaching agent, in an amount of 5 parts by weight to 50 parts by weight based on 100 parts by weight of the waste sagger crushed material crushed to 200# (mesh) or less at a temperature of 50 °C to 80 °C to be reacted for 30 minutes to 120 minutes. For reference, if alkali metal hydroxide (or oxide) and alkali metal hydroxide (or oxide) corresponding to 5 % to 50% of the amount of the alkali metal hydroxide used are further introduced under the same conditions, there is an effect of increasing the leaching rate and leaching rate of lithium by about 5%. The above-described method may be a preferred method if an increase in process cost can be tolerated.

### (3) Third process: Primary solid-liquid separation process

A dissolution reaction liquid of the waste sagger crushed material is subjected to solid-liquid separation (primary solid-liquid separation). The primary solid-liquid separation may be performed using a sedimentation tank, a filter press, a screw filter, a centrifuge, or the like, or a combination of two or more thereof to increase the efficiency. A solid phase obtained by the primary solid-liquid separation includes a positive electrode active material and a refractory material composition, and a liquid phase (filtrate) includes lithium (Li⁺), aluminum (Al(OH)₄⁻), and silicon (H₂SiO₄²⁻). The filtrate is introduced to an anion exchange process and a carbonation process to be used in producing high-purity lithium carbonate, and the solid phase is introduced to a multi-stage magnetic separation process, a lithium leaching process, and a carbonation reaction process to recover lithium contained thereinside as lithium carbonate, wherein the recovered lithium carbonate is introduced to a pressurized carbonic acid dissolution process performed after the anion exchange process and the carbonation process of the filtrate to be produced as high-purity lithium carbonate. Hereinafter, the process of producing high-purity lithium carbonate by using a filtrate will be described first, and then the process of producing high-purity lithium carbonate by using a solid phase will be described.

### (4) Fourth process: Anion exchange process

The filtrate obtained in the primary solid-liquid separation process is a strongly alkaline lithium hydroxide aqueous solution with a pH of 12 or higher. The lithium hydroxide aqueous solution contains impurities such as Al(OH)₄⁻, H₂SiO₄²⁻, and Ca²⁺ together with lithium hydroxide. In the present invention, in order to remove the impurities, an anion exchange process of passing through an anion exchange resin is performed. The anion exchange resin may be a resin usable in a strong base region, and preferably a resin including an OH⁻ functional group by adsorbing trimethyl ammonium or dimethyl ethanolamine onto a styrene-based resin having a gel structure. The anion exchange process may be performed in an ion exchange tower in which the height of the anion exchange resin layer is 80 cm or higher, and performed by flowing the lithium hydroxide aqueous solution at a flow rate of 0.1 m/sec to 1 m/sec under a room temperature condition. The ion exchange tower is preferably a continuous ion exchange tower designed to be in contact with a processing solution in a countercurrent manner and to regenerate and introduce a resin used for a predetermined period of time. When the filtrate (lithium hydroxide aqueous solution) obtained from the primary solid-liquid separation process is injected into the ion exchange tower, the impurities are combined with the anion exchange resin and remain, and the lithium hydroxide aqueous solution is obtained as a flow-through, thereby improving the purity. The anion exchange resin used for a predetermined period of time is regenerated by desorption of absorbed anions, and a backwash solution generated at this time is sent to the second process, the waste sagger crushed material dissolution process, and reused, and the regenerated anion exchange resin is sent to the anion exchange tower and reused. At this time, water and slaked lime may be further added to the backwash solution and introduced to the waste sagger crushed material dissolution process.

### (5) Fifth process: Primary carbonation reaction process

The flow-through which has passed through the ion exchange tower is a lithium hydroxide aqueous solution from which the impurities are removed. In the present invention, a primary carbonization reaction process is performed to obtain lithium carbonate (Li₂CO₃) from the lithium hydroxide. To the primary carbonation reaction process, a first carbonation method (refer to Formula 1) performed by injecting a carbon dioxide (CO₂) gas into a lithium hydroxide aqueous solution, a second carbonation method (see Formula 2) performed by mixing a lithium hydroxide aqueous solution with carbonated water, a third carbonation method (see Formula 3) performed by mixing a lithium hydroxide aqueous solution with a lithium hydrogen carbonate aqueous solution, a fourth carbonation method (see Formula 4) performed by mixing a lithium hydroxide aqueous solution with a sodium carbonate aqueous solution, or a fifth carbonation method (see Formula 5) performed by mixing a lithium hydroxide aqueous solution with a potassium carbonate aqueous solution may be applied.

[Formula 1] 2LiOH + CO₂ → Li₂CO₃ + H₂O

[Formula 2] 2LiOH + H₂CO₃ → Li₂CO₃ + 2H₂O

[Formula 3] LiOH + LiHCO₃ → Li₂CO₃ + H₂O

[Formula 4] 2LiOH + Na₂CO₃ → Li₂CO₃ + 2NaOH

[Formula 5] 2LiOH + K₂CO₃ → Li₂CO₃ + 2KOH

Among the above-described carbonation methods, the fourth carbonation method and the fifth carbonation method have a risk of generating impurities such as sodium and potassium, respectively, and thus, have a problem in that the impurities are required to be removed through an additional process. Therefore, in the present invention, the first carbonation method, the second carbonation method, or the third carbonation method, which do not have the risk of generating impurities, are used, and preferably, the first carbonation method of injecting a carbon dioxide gas is used.

According to the embodiment of the present invention, the first carbonation method is performed by introducing 1 liter of a lithium hydroxide aqueous solution concentrated to a concentration of 2 mol/ℓ into a pressure reaction tank with a capacity of 1.5 liters, blowing the carbon dioxide gas at a flow rate of 1 ℓ/min, and stirring the mixture, wherein a lithium carbonate generation reaction is completed in about 22 minutes. In this reaction, the concentration of the lithium hydroxide aqueous solution is suitably 0.5 mol/ℓ to 5 mol/ℓ. If the concentration of the lithium hydroxide aqueous solution is lower than 0.5 mol/ℓ, the amount of lithium carbonate produced is too small, thereby degrading the process efficiency, and if the concentration thereof is higher than 5 mol/ℓ, the viscosity of the aqueous solution is too high, thereby preventing the impurities from being removed. The first carbonation method of the present invention is an exothermic reaction, and when a 20 °C aqueous solution is subjected to the reaction, the temperature at the end of the reaction is about 35 °C. Therefore, there is no need for a separate heating operation during the reaction period, but as the temperature increases, the solubility of lithium carbonate decreases, which not only improves the yield of the lithium carbonate, but also accelerates the crystal growth rate, resulting in an effect of increasing the purity by recrystallization, so that it is preferable that the reaction is performed to allow the temperature of a final reaction liquid to be 80 °C to 100 °C.

A carbonation reaction liquid of the present invention is in a strongly alkaline state with a pH of 12 or higher at the beginning of the reaction, and as the reaction progresses, the pH gradually decreases and converges to a pH of 7. The production of lithium carbonate is completed around a pH of 9, and in a pH state lower than pH 9, the lithium carbonate is redissolved into lithium bicarbonate. Therefore, it is preferable that the carbonation reaction is completed when the pH is between 8 and 10. However, even if the reaction proceeds until the pH of the reaction liquid reaches 7, the produced lithium bicarbonate is recovered in the subsequent process, so that the yield is not degraded, and there is rather an advantage of minimizing membrane damage in the subsequent reverse osmosis concentration process, so that it is more preferable to perform the reaction until the pH of the reaction liquid reaches 7.

In summary, the primary carbonation reaction process of the present invention is performed by introducing a lithium hydroxide aqueous solution having a concentration of 0.5 mol/ℓ to 5 mol/ℓ into a pressure reaction vessel (or a sealed container), injecting a carbon dioxide gas thereto to allow a reaction to occur therebetween until the pH reaches 7, and then heating a reaction liquid until the temperature thereof reaches 80 °C to 100 °C, and then letting the mixture to stay at the above temperature for 20 minutes or more to complete the carbonation reaction.

The second carbonation method of the present invention may use carbonated water prepared by injecting a carbon dioxide gas at a pressure of 5 bar to 20 bar at a temperature of 5 °C to 10 °C or lower, and preferably, uses carbonated water prepared by injecting a carbon dioxide gas at a pressure of 10 bar and at a temperature of 5 °C or lower. The carbonated water prepared by injecting a carbon dioxide gas at a pressure of 10 bar and at a temperature of 5°C or lower contains about 0.68 mol of carbon dioxide.

According to the embodiment of the present invention, if 1 ℓ of the carbonated water and 500 mℓ of a 2.72 mol lithium hydroxide aqueous solution are mixed, reacted at 20 °C for 30 minutes, heated to 100 °C, aged for 10 minutes, and then filtered, it is possible to obtain about 39 g of high-purity lithium carbonate. In this reaction, it is also preferable that when the above-described reaction is completed, the pH of the aqueous solution is about 7.

The third carbonation method of the present invention is a method of using a lithium hydrogen carbonate (LiHCO₃) aqueous solution, and a lithium hydrogen carbonate aqueous solution prepared by reacting lithium carbonate and carbonated water, or a lithium hydrogen carbonate aqueous solution prepared by reacting lithium carbonate and carbon dioxide in a pressure vessel may be used. It is preferable that the lithium hydrogen carbonate aqueous solution prepared by reacting lithium carbonate and carbon dioxide in a pressure vessel is used as the lithium hydrogen carbonate aqueous solution, and the reason is that if the lithium carbonate and the carbon dioxide are reacted in the pressure vessel, the concentration of lithium bicarbonate in the aqueous solution may be rapidly increased.

### (6) Sixth process: Secondary solid-liquid separation process

Solid-liquid separation is performed on the carbonation reaction liquid to obtain lithium carbonate in a solid phase and a filtrate in a liquid phase. The filtrate contains about 1,500 mg/ℓ to 2,000 mg/ℓ of lithium ions, and is introduced to a lithium phosphate production process to be prepared as high-purity lithium phosphate.

### (7) Seventh process: Pressurized carbonic acid dissolution process

The lithium carbonate in a solid phase obtained from the secondary solid-liquid separation process includes trace amounts of silicon and aluminum as impurities. If the lithium carbonate is added with water to be prepared as a suspension, and then a carbon dioxide (CO₂) gas is injected thereto, the lithium carbonate is dissolved into lithium bicarbonate, and silicon and aluminum, which are impurities, remain without being dissolved, so that it is possible to remove the impurities by performing solid-liquid separation. Specifically, if lithium carbonate and a carbon dioxide gas come into contact, the pH of a reaction liquid converges to 6 to 8 over time, and the lithium carbonate becomes lithium bicarbonate and is dissolved, whereas an aluminum impurity (Al(OH)₃), a silicon impurity (SiO₂), and calcium carbonate (CaCO₃), which are not dissolved at this time are removed in a solid phase through a solid-liquid separation process.

For the pressurized carbonic acid dissolution process, the slurry concentration may be controlled such that lithium carbonate is in an amount of 2 parts by weight to 12 parts by weight based on 100 weight parts of water. If the lithium carbonate of the slurry is less than 2 parts by weight, the process efficiency decreases, and if the lithium carbonate of the slurry is greater than 12 parts by weight, the time required to completely dissolve the lithium carbonate increases, and the lithium carbonate which has not completely dissolved is removed together with impurities, thereby causing a problem of decreasing the yield. The solubility of lithium carbonate with respect to carbonated water increases as the temperature decreases. It is preferable that the pressurized carbonic acid dissolution process of the present invention is performed at 0 °C to 20 °C. The time taken for the dissolution reaction of lithium carbonate to be completed depends on the pressure of a carbonic acid gas, and the reaction is completed within 30 minutes at 10 bar or greater, and is completed in about 2 hours at 1 bar. The pressurized carbonic acid dissolution process may also be used in a process in which lithium carbonate produced from the solid phase of the primary solid-liquid separation process is introduced to be produced as high-purity lithium carbonate. The process in which the solid phase of the primary solid-liquid separation process is produced as lithium carbonate and introduced to the pressurized carbonic acid dissolution process will be described in detail below.

### (8) Eighth process: Tertiary solid-liquid separation process

Through tertiary solid-liquid separation process, a lithium bicarbonate aqueous solution prepared through the pressurized carbonic acid dissolution process and insoluble materials such as Al(OH)₃, SiO₂, and CaCO₃ are separated. Through the above-described solid-liquid separation, the insoluble materials are obtained in a solid phase, and the lithium bicarbonate aqueous solution is obtained in a liquid phase.

### (9) Ninth process: Primary heating fractional precipitation process

The lithium bicarbonate aqueous solution obtained from the tertiary solid-liquid separation process is heated to precipitate lithium carbonate. The above-described precipitation process is represented by Formula 6.

[Formula 6] 2LiHCO₃ ⇄ Li₂CO₃ + CO₂ + H₂O

If the reaction temperature is low and the pressure is increased, a lithium carbonate dissolution reaction proceeds to produce lithium bicarbonate, and if the reaction temperature is high and the pressure is decreased, lithium bicarbonate is precipitated as lithium carbonate. The above-described reaction has a disadvantage in that lithium carbonate is precipitated with only simple intense stirring or aeration, but the speed of the precipitation is very slow. Therefore, in the present invention, a reaction liquid is heated to 80 °C to 100°C while being stirred to precipitate lithium carbonate. The precipitation reaction rate of lithium carbonate varies depending on temperature and pressure, and the higher the temperature and the lower the pressure, the higher the rate. According to the embodiment of the present invention, if an aqueous solution having a concentration of 2 mol/ℓ of lithium carbonate (LiHCO₃) is heated to 100 °C, the precipitation reaction is completed within 20 minutes.

### (10) Tenth process: Quaternary solid-liquid separation process

If a reaction liquid in which lithium carbonate is recrystallized through the above-described heating fractional precipitation process is subjected to solid-liquid separation, precipitated lithium carbonate is obtained in a solid phase. The obtained lithium carbonate is high-purity lithium carbonate with a purity of 99.9%. An aqueous solution obtained in a liquid phase (filtrate) from the above-described solid-liquid separation may be introduced to a reverse osmosis concentration process to be used in producing high-purity lithium phosphate.

### (11) Eleventh process: Drying process

The high-purity lithium carbonate obtained from the quaternary solid-liquid separation is dried to be prepared as a high-purity lithium carbonate (purity of 99.9% or greater) product.

The present invention provides a method for recovering high-purity lithium carbonate from a waste sagger, wherein the method includes a twelfth step of crushing a waste sagger to produce a waste sagger crushed material, a thirteenth step of adding an alkali leaching agent and water to the waste sagger crushed material and then allowing a reaction to occur therebetween to prepare a waste sagger crushed material dissolution reaction slurry, a fourteenth step of performing primary solid-liquid separation on the waste sagger crushed material dissolution reaction slurry, a fifteenth step of preparing a solid phase obtained through the primary solid-liquid separation as a suspension, and then performing primary wet magnetic separation to obtain a first magnetic complex and a first non-magnetic complex, a sixteenth step of preparing the first non-magnetic complex as a suspension, and then performing secondary wet magnetic separation to obtain a second magnetic complex and a second non-magnetic complex, a seventeenth step of introducing water and a leaching agent to the second non-magnetic complex, and then allowing a reaction to occur therebetween to prepare a lithium leaching reaction liquid, an eighteenth step of adjusting the pH of the lithium leaching reaction liquid to 6 to 8 to prepare a neutralization reaction liquid, a nineteenth step of performing quinary solid-liquid separation on the neutralization reaction liquid, a twentieth step of performing reverse osmosis concentration on a filtrate obtained in a liquid phase through the quinary solid-liquid separation, a twenty-first step of performing a carbonation reaction on a concentration liquid obtained through the reverse osmosis concentration process, a twenty-second step of performing senary solid-liquid separation on a reaction liquid of the carbonation reaction, a twenty-third step of performing a pressurized carbonic acid dissolution reaction on lithium carbonate obtained in a solid phase through the senary solid-liquid separation, a twenty-fourth step of performing tertiary solid-liquid separation on a reaction liquid of the pressurized carbonic acid dissolution reaction, a twenty-fifth step of performing a heating fractional precipitation reaction on a filtrate obtained in a liquid phase through the tertiary solid-liquid separation, a twenty-sixth step of performing quaternary solid-liquid separation on a reaction liquid of the heating fractional precipitation reaction, and a twenty-seventh step of drying a solid phase obtained through the quaternary solid-liquid separation to obtain high-purity lithium carbonate.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the leaching agent used for leaching the second non-magnetic complex is an acid leaching agent including one or two or more among sulfuric acid, nitric acid, and hydrochloric acid; or an alkali leaching agent including one or two or more among sodium hydroxide, potassium hydroxide, calcium hydroxide, calcium oxide, and magnesium hydroxide.

The reverse osmosis concentration uses a batch-type reverse osmosis facility, and the upper limit of the working pressure of a pump is set to 50 kg/cm², and the filtrate obtained in a liquid phase through the tertiary solid-liquid separation is concentrated until the concentration of lithium therein reaches 10,000 mg/ℓ to 70,000 mg/ℓ, and the pressurized carbonic acid dissolution reaction is performed by mixing 100 parts by weight of water and 2 parts by weight to 12 parts by weight of lithium carbonate obtained in a solid phase through the secondary solid-liquid separation in a pressure reaction vessel (or a sealed container), and then blowing a carbon dioxide (CO₂) gas at 0 °C to 20 °C to maintain the carbon dioxide gas pressure in the reaction vessel at 1 bar to 25 bar, and stirring the mixture for 30 minutes to 120 minutes to dissolve the lithium carbonate.

The heating fractional precipitation reaction is performed by heating a concentration liquid obtained through reverse osmosis concentration to 80 °C to 100 °C for 20 minutes or more to precipitate lithium carbonate, and the high-purity lithium carbonate has a purity of 99.9% or greater.

Hereinafter, a process for producing high-purity lithium carbonate by using the solid phase obtained from the primary solid-liquid separation process, which is the third process, will be described.

### (12) Twelfth process: Primary wet magnetic separation process

Primary wet magnetic separation is performed on the solid phase obtained through the primary solid-liquid separation, which is the third process. It is preferable that the primary wet magnetic separation process is performed after preparing a slurry by adding water to the solid phase, and it is sufficient for the water to have quality similar to that of industrial water, and it is also possible to reuse the water used in the process as long as it has the same quality. The primary wet magnetic separation is to remove iron pieces (iron oxide) or iron scales mixed in by wear during the crushing of the waste sagger. The iron pieces or the iron scales have very strong magnetization ability, so that it is possible to remove the iron pieces or the iron scales as magnetic complexes at a magnetic flux density of about 100 gauss to 500 gauss. At 200 gauss or less, the iron pieces and the iron scales are mostly removed as magnetic complexes, but at greater than 200 gauss, the mixing-in rate of a positive electrode active material increases together with the iron pieces and the iron scales as magnetic complexes. Therefore, if the wet magnetic separation is performed at greater than 200 gauss, separate magnetic force may be required for the mixed-in positive electrode active material. Magnetic complexes separated through the primary wet magnetic separation process includes iron pieces and iron scales, and non-magnetic complexes includes a positive electrode active material, alumina, silica, magnesium aluminate, aluminum silicate, and lithium aluminum silicate.

### (13) Thirteenth process: Secondary wet magnetic separation process

The secondary wet magnetic separation process of the present invention is to separate, from the non-magnetic complexes of the primary wet magnetic separation process, a positive electrode active material containing nickel oxide, cobalt oxide, and the like, alumina, silica, magnesium aluminate, aluminum silicate, and lithium aluminum silicate. The positive electrode active material included in the non-magnetic complexes has properties of a weak magnetic or paramagnetic body. Therefore, a magnet having a high magnetic flux density is required to recover the positive active material as a magnetic complex. The secondary wet magnetic separation process of the present invention may use a high-gradient magnetic separator having a magnetic flux density of 10,000 gauss or greater, and may preferably use a high-gradient magnetic separator having a magnetic flux density of 30,000 gauss or greater. In addition, the high-gradient magnetic separator may preferably have a structure in which a slurry containing particles to be separated flows between magnetized magnetic media. The solid concentration of the slurry may be 1% to 10%. If the solid concentration is less than 1%, there is a problem in that the number of unnecessary storage tanks increases and the energy cost increases due to an increase in water capacity, and if the solid concentration is greater than 10%, the separation efficiency is significantly degraded. Through the secondary wet magnetic separation process, the positive electrode active material is separated as a magnetic complex, and the remaining compositions of the waste sagger from which the water-soluble lithium has been removed, such as the alumina, the silica, the magnesium aluminate, the aluminum silicate, and the lithium aluminum silicate, are separated non-magnetic complexes. The amount of lithium contained in the lithium aluminum silicate, which is a poorly soluble lithium compound remaining in the solid phase of the primary solid-liquid separation process after water leaching, is approximately 1,000 mg to 6,000 mg per 1 kg of the waste sagger crushed material.

### (14) Fourteenth process: Lithium leaching and neutralization process

When the poorly soluble lithium compound included in the non-magnetic complexes of the secondary wet magnetic separation process is reacted with a leaching agent, a leached liquid from which lithium has been eluted and leached residues are obtained. The leaching agent may be an acid leaching agent including one or two or more among sulfuric acid, nitric acid, and hydrochloric acid, or may be an alkali leaching agent including one or two or more among sodium hydroxide, potassium hydroxide, calcium hydroxide, calcium oxide, and magnesium hydroxide.

When leaching lithium from the poorly soluble lithium compound by using the leaching agent, if the temperature of a reaction liquid is 100 °C or lower, there is a problem in that it is difficult to increase the leaching rate to 95% or greater. In order to solve the above-described problem, if stirring is performed sufficiently for 1 hour or more by setting the reaction temperature to 100 °C to 200 °C and setting the reaction pressure to 2 bar to 16 bar, the poorly soluble lithium compound is decomposed, so that there is an advantage in that it is possible to recover lithium with a leaching rate of 95% or greater.

According to the embodiment of the present invention, it is preferable that the acid leaching agent is added in an amount which allows the pH of the reaction liquid to be 1 to 2 after the leaching reaction, and in the case of using sulfuric acid, the sulfuric acid may be used in an amount of 5 parts by weight to 50 parts by weight based on 100 parts by weight of the non-magnetic complexes. Preferably, if 50 parts by weight of sulfuric acid is added to 100 parts by weight of the non-magnetic complexes, and then 350 parts by weight of a slurry mixed with water is introduced into a sealed reaction container to be subjected to a leaching reaction at 150 °C for 3 hours, 97% or greater of lithium is leached. If an acid is used, most of insoluble materials are oxides containing silicon or aluminum.

If leaching is performed by using the alkali leaching agent, the alkali leaching agent is used in an addition amount of 5 parts by weight to 50 parts by weight based on 100 parts by weight of the non-magnetic complexes, wherein the reaction temperature is set to 100 °C to 200 °C, and the reaction time is preferably 1 hour to 10 hours. The alkali leaching agent is more effective when used in combination with an alkali metal and an alkali earth metal than when used alone. Specifically, it is preferable that 2 parts by weight to 20 parts by weight of an alkali metal hydroxide and 3 parts by weight to 30 parts by weight of an alkali earth metal hydroxide are mixed and used based on 100 parts of the non-magnetic complexes.

When the leaching is completed after a predetermined leaching time has elapsed, the reaction tank is stopped being heated such that the temperature of a reaction liquid is to be 100 °C or lower, and then a neutralizing agent is introduced thereto. As a neutralizing agent for the acid leaching agent, a hydroxide of an alkali metal or alkali earth metal is used, and as a neutralizing agent for the alkali leaching agent, sulfuric acid is used. The neutralizing agent is used in an amount which allows the pH of the reaction liquid to be 6 to 8 after the end of the neutralization reaction. If the alkali leaching agent is used, the alkali leaching agent may be introduced to the secondary solid-liquid separation without the neutralization reaction process.

### (15) Fifteenth process: Quinary solid-liquid separation process

In order to separate a lithium aqueous solution and precipitates produced through the neutralization reaction process, a secondary solid-liquid separation process is performed on a neutralization reaction liquid. When the solid-liquid separation is performed on the neutralization reaction liquid, the lithium aqueous solution is obtained in a liquid phase and impurities are obtained in a solid phase. The impurities include silica, aluminum hydroxide, and the like.

An alkali leaching reaction liquid which has not undergone the neutralization reaction process is subjected to secondary solid-liquid separation process to separate a lithium aqueous solution and precipitates. When the solid-liquid separation is performed on the alkali leaching reaction liquid,, the lithium aqueous solution is obtained in a liquid phase and impurities are obtained in a solid phase. The impurities include silica, aluminum hydroxide, and the like. The liquid phase is introduced to an anion exchange process, which is the fourth process, to be produced as high-purity lithium carbonate.

### (16) Sixteenth process: Primary reverse osmosis concentration process

The concentration of lithium contained in a liquid phase (lithium aqueous solution) obtained through the quinary solid-liquid separation with respect to the neutralization reaction liquid is 300 mg/ℓ to 3,000 mg/ℓ, and there is a problem in that the efficiency of recovering the lithium contained at the above-described concentration without concentration is too low. Therefore, in the present invention, the lithium aqueous solution is concentrated to increase the lithium concentration, and then lithium recovery is performed. As for the concentration method, it is preferable to use a reverse osmosis filter having a low energy cost. As the reverse osmosis filter of the present invention, it is preferable to use an inexpensive batch-type reverse osmosis facility instead of a multi-stage countercurrent-type reverse osmosis facility used in a large-scale desalination process. The concentration of the lithium aqueous solution may be performed such that the lithium concentration reaches 10,000 mg/ℓ to 70,000 mg/ℓ. If lithium is concentrated to a concentration lower than 10,000 mg/ℓ, the energy cost of the subsequent evaporation and concentration process becomes excessive, and if lithium is concentrated to a concentration higher than 70,000 mg/ℓ, the energy cost required to apply a high reverse osmosis pressure becomes excessive, which is no different from an evaporation method. Preferably, the concentration process may be performed such that the concentration reaches 50,000 mg/ℓ. In order to perform concentration until the lithium concentration reaches 50,000 mg/ℓ, a water level control sensor may be used, and the upper limit of the working pressure of a pump may be set to 50 kg/cm². The processing water obtained from the primary reverse osmosis concentration process may be used as water of the primary wet magnetic separation process of the twelfth process.

### (17) Seventeenth process: Secondary carbonation reaction process

Lithium concentrated water obtained through the primary reverse osmosis concentration process is brought into contact with a carbonate aqueous solution containing carbonic acid ions to perform secondary carbonation reaction process for recovering lithium carbonate (Li₂CO₃). The reaction between the lithium concentrated water and the carbonate aqueous solution is represented by Formula 7 below.

[Formula 7] Li₂SO₄ + Na₂CO₃ → Li₂CO₃ + Na₂SO₄

The carbonate aqueous solution of the carbonation reaction may be prepared using one or more selected from among sodium carbonate, potassium carbonate, and ammonium carbonate, and the concentration of the aqueous solution is 0.5 mol/ℓ to 5 mol/ℓ, and the reaction temperature is preferably 30 °C to 100 °C. Lithium carbonate produced at a temperature of lower than 30 °C has a fine particle size, thereby causing difficulty in a solid-liquid separation process, having a high impurity content, and causing a problem of a low lithium recovery rate.

### (18) Eighteenth process: Senary solid-liquid separation process

Solid-liquid separation is performed on a slurry which has undergone the secondary carbonation reaction process to obtain lithium carbonate in a solid phase and a filtrate in a liquid phase. Since the lithium carbonate may contain impurities, in order to further improve the purity, the lithium carbonate is introduced to the pressurized carbonic acid dissolution process of the seventh process to be produced as high-purity lithium carbonate. The filtrate contains about 1,500 mg/ℓ to 2,000 mg/ℓ of lithium ions together with impurities. If the impurity content of the filtrate is 5,000 mg/ℓ or less, the filtrate is re-introduced to the secondary carbonation reaction process of the seventeenth process to be used in producing lithium carbonate, and if the impurity content of the filtrate is greater than 5,000 mg/ℓ, the filtrate is introduced to a lithium phosphate precipitation process to be used in producing high-purity lithium phosphate.

The specific embodiments described in this specification are representative of preferred embodiments or examples of the present invention, and the scope of the present invention is not limited thereby. It will be apparent to those skilled in the art that modifications and other uses of the present invention do not depart from the scope of the invention described in the claims of this specification.

### INDUSTRIAL APPLICABILITY

When the method for producing high-purity lithium carbonate from a waste sagger of the present invention is used, it is possible not only to produce high-purity lithium carbonate that can be used for manufacturing lithium secondary batteries by recycling a discarded waste sagger, but also to recycle a positive electrode active material, iron oxide, alumina, silicate, and calcium carbonate obtained as by-products during the production process of the lithium carbonate for industrial use.

## Claims

1. A method for producing high-purity lithium carbonate from a waste sagger, the method comprising:
a first step of crushing a waste sagger to produce a waste sagger crushed material;
a second step of adding an alkali leaching agent and water to the waste sagger crushed material and then allowing a reaction to occur therebetween to prepare a waste sagger crushed material dissolution reaction slurry;
a third step of performing primary solid-liquid separation on the waste sagger crushed material dissolution reaction slurry;
a fourth step of allowing a filtrate obtained in a liquid phase through the primary solid-liquid separation to flow through an anion exchange resin to perform an anion exchange reaction;
a fifth step of performing a carbonation reaction on a flow-through of the anion exchange reaction to prepare a carbonation reaction liquid;
a sixth step of performing secondary solid-liquid separation on the carbonation reaction liquid;
a seventh step of performing pressurized carbonic acid dissolution reaction on a solid phase obtained through the secondary solid-liquid separation;
an eighth step of performing tertiary solid-liquid separation on a reaction liquid of the pressurized carbonic acid dissolution reaction;
a ninth step of performing a heating fractional precipitation reaction on a filtrate obtained in a liquid phase through the tertiary solid-liquid separation;
a tenth step of performing quaternary solid-liquid separation on a reaction liquid of the heating fractional precipitation reaction; and
an eleventh step of drying a solid phase obtained through the quaternary solid-liquid separation to obtain high-purity lithium carbonate.

2. The method of claim 1, wherein the waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes.

3. The method of claim 1, wherein the anion exchange resin is an anion exchange resin prepared by allowing trimethyl ammonium or dimethyl ethanolamine to be adsorbed onto a styrene-based resin having a gel structure, wherein the anion exchange reaction is performed by allowing the filtrate obtained in a liquid phase through the primary solid-liquid separation to flow through an anion exchange tower filled with the anion exchange resin at a flow rate of 0.1 m/sec to 1 m/sec.

4. The method of claim 1, wherein the carbonation reaction is performed by introducing the flow-through of the anion exchange reaction into a pressure reaction vessel (or a sealed container), injecting one or two or more selected from among carbon dioxide, carbonated water, Any one thereof or lithium hydrogen carbonate aqueous solution to the flow-through to allow a reaction to occur therebetween until the pH reaches 7, and then letting the mixture to stay at a temperature of 80 °C to 100 °C for 20 minutes or more to complete the reaction.

5. The method of claim 1, wherein the pressurized carbonic acid dissolution reaction is performed by mixing 100 parts by weight of water and 2 parts by weight to 12 parts by weight of lithium carbonate obtained in a solid phase through the secondary solid-liquid separation in a pressure reaction vessel (or a sealed container), and then blowing a carbon dioxide (CO₂) gas at 0 °C to 20 °C to maintain the carbon dioxide gas pressure in the reaction vessel at 1 bar to 25 bar, and stirring the mixture for 30 minutes to 120 minutes to dissolve the lithium carbonate.

6. The method of claim 1, wherein the heating fractional precipitation reaction is performed by heating a concentration liquid obtained through reverse osmosis concentration to 80 °C to 100 °C for 20 minutes or more to precipitate lithium carbonate.

7. The method of claim 1, wherein the high-purity lithium carbonate has a purity of 99.9% or greater.

8. A method for producing high-purity lithium carbonate from a waste sagger, the method comprising:
a twelfth step of crushing a waste sagger to produce a waste sagger crushed material;
a thirteenth step of adding an alkali leaching agent and water to the waste sagger crushed material and then allowing a reaction to occur therebetween to prepare a waste sagger crushed material dissolution reaction slurry;
a fourteenth step of performing primary solid-liquid separation on the waste sagger crushed material dissolution reaction slurry;
a fifteenth step of preparing a solid phase obtained through the primary solid-liquid separation as a suspension, and then performing primary wet magnetic separation to obtain a first magnetic complex and a first non-magnetic complex;
a sixteenth step of preparing the first non-magnetic complex as a suspension, and then performing secondary wet magnetic separation to obtain a second magnetic complex and a second non-magnetic complex;
a seventeenth step of introducing water and a leaching agent to the second non-magnetic complex, and then allowing a reaction to occur therebetween to prepare a lithium leaching reaction liquid;
an eighteenth step of adjusting the pH of the lithium leaching reaction liquid to 6 to 8 to prepare a neutralization reaction liquid;
a nineteenth step of performing quinary solid-liquid separation on the neutralization reaction liquid;
a twentieth step of performing reverse osmosis concentration on a filtrate obtained in a liquid phase through the quinary solid-liquid separation;
a twenty-first step of performing a carbonation reaction on a concentration liquid obtained through the reverse osmosis concentration process;
a twenty-second step of performing senary solid-liquid separation on a reaction liquid of the carbonation reaction;
a twenty-third step of performing a pressurized carbonic acid dissolution reaction on lithium carbonate obtained in a solid phase through the senary solid-liquid separation;
a twenty-fourth step of performing tertiary solid-liquid separation on a reaction liquid of the pressurized carbonic acid dissolution reaction;
a twenty-fifth step of performing a heating fractional precipitation reaction on a filtrate obtained in a liquid phase through the tertiary solid-liquid separation;
a twenty-sixth step of performing quaternary solid-liquid separation on a reaction liquid of the heating fractional precipitation reaction; and
a twenty-seventh step of drying a solid phase obtained through the quaternary solid-liquid separation to obtain high-purity lithium carbonate.

9. The method of claim 1, wherein the waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes.

10. The method of claim 8, wherein the leaching agent used for leaching the second non-magnetic complex is an acid leaching agent including one or two or more among sulfuric acid, nitric acid, and hydrochloric acid; or an alkali leaching agent including one or two or more among sodium hydroxide, potassium hydroxide, calcium hydroxide, calcium oxide, and magnesium hydroxide.

11. The method of claim 8, wherein the reverse osmosis concentration uses a batch-type reverse osmosis facility, and the upper limit of the working pressure of a pump is set to 50 kg/cm², and the filtrate obtained in a liquid phase through the tertiary solid-liquid separation is concentrated until the concentration of lithium therein reaches 10,000 mg/ℓ to 70,000 mg/ℓ.

12. The method of claim 8, wherein the pressurized carbonic acid dissolution reaction is performed by mixing 100 parts by weight of water and 2 parts by weight to 12 parts by weight of lithium carbonate obtained in a solid phase through the secondary solid-liquid separation in a pressure reaction vessel (or a sealed container), and then blowing a carbon dioxide (CO₂) gas at 0 °C to 20 °C to maintain the carbon dioxide gas pressure in the reaction vessel at 1 bar to 25 bar, and stirring the mixture for 30 minutes to 120 minutes to dissolve the lithium carbonate.

13. The method of claim 8, wherein the heating fractional precipitation reaction is performed by heating a concentration liquid obtained through reverse osmosis concentration to 80 °C to 100 °C for 20 minutes or more to precipitate lithium carbonate.

14. The method of claim 8, wherein the high-purity lithium carbonate has a purity of 99.9% or greater.
